# EUROPEAN PATENT APPLICATION

(11) **EP 4 553 949 A1**
(43) Date of publication of application: **14.05.2025**
(21) Application number: 24211044.3
(22) Date of filing: 06.11.2024
(51) Int. Cl.: H01M 10/42, H01M 50/503

(54) **COLLECTION ASSEMBLY AND BATTERY PACK**

(30) Priority: 07.11.2023 CN 202323005286 U; 06.06.2024 WO PCT/CN2024/097776
(71) Applicant: Eve Energy Co., Ltd., Huizhou, Guangdong 516006 (CN)
(72) Inventor: CHEN, Jingcong, Huizhou, Guangdong, 516006 (CN)
(74) Representative: Murgitroyd & Company

(57) **Abstract**

A collection assembly and a battery pack are provided. The collection assembly includes: a mounting bracket (20) that can be mounted on a cell (10); and a circuit board (30) having both a wiring portion (31) that can be connected to the cell (10) and a mounting portion (32), where the mounting portion (32) is detachably mounted on the mounting bracket (20).

## Description

### TECHNICAL FIELD

The present disclosure relates to the field of battery technologies, and more particular to a collection assembly and a battery pack.

### BACKGROUND

A power battery may be used to power electric vehicles, electric trains, electric bicycles, golf carts, and the like. The power battery may be typically present in the form of a battery pack. The battery pack may include a plurality of cells, and voltage information and temperature information of the plurality of cells may be collected by a collection assembly. A plastic bracket of the collection assembly may be fixed to a reinforcing plate of an Flexible Printed Circuit (FPC) by hot riveting connection.

### SUMMARY

The plastic bracket of the collection assembly may be fixed to the reinforcing plate of the FPC by the hot riveting connection, so that it is difficult to disassemble the collection assembly, and even damage of the collection assembly may be caused during disassembling of the collection assembly, thereby causing difficulty in overhaul and maintenance of the collection assembly.

The present disclosure provides a collection assembly, including: a mounting bracket that can be mounted on a cell; and a circuit board having both a wiring portion configured to be connected to the cell and a mounting portion, where the mounting portion is detachably mounted on the mounting bracket.

The present disclosure further provides a battery pack, including the above-described collection assembly.

The collection assembly provided by the present disclosure includes the mounting bracket and the circuit board, where the mounting bracket is mounted on the cell, and the wiring portion of the circuit board is connected to the cell. By enabling the mounting portion of the circuit board to be detachably mounted on the mounting bracket, disassembly between the mounting bracket and the circuit board can be facilitated, and the collection assembly is not easily damaged during disassembling of the collection assembly, thereby improving the difficulty in overhaul and maintenance of the collection assembly.

The battery pack provided by the disclosure has the beneficial effect of the collection assembly.

### DESCRIPTION OF THE DRAWINGS

FIG. 1 is a perspective diagram of a cell group according to some embodiments of the present disclosure.
FIG. 2 is a first perspective diagram of a circuit board according to some embodiments of the present disclosure.
FIG. 3 is a first perspective view of a mounting bracket according to some embodiments of the present disclosure.
FIG. 4 is a second perspective diagram of a circuit board according to some embodiments of the present disclosure.
FIG. 5 is a second perspective view of a mounting bracket according to some embodiments of the present disclosure.
FIG. 6 is a perspective diagram of a fastener according to some embodiments of the present disclosure.

In FIGS:
10-Cell; 20-Mounting bracket; 21-First mounting surface; 211-First snap-fit portion; 324-First limiting portion; 2112-Second limiting portion; 212-First connection hole; 213-First fastening portion; 214-Second fastening portion; 22-Second mounting surface; 221-Stud; 23-First groove portion; 24-Second groove portion; 25-Envelope portion; 26-Mount portion, 30-Circuit board, 31-Wiring portion; 32-Mounting portion; 321-First mounting portion; 3211-Second snap-fit portion; 3212-Second connection hole; 322-Second mounting portion; 3221-Through-hole; 323-Reinforcing plate; 324-Body plate; and 40-Fastener.

### DETAILED DESCRIPTION

In the description of the present disclosure, it should be understood that orientations or position relationships indicated by the terms "center", "longitudinal", "lateral", "length", "width", "thickness", "upper", "lower", "front", "rear", "left", "right", "vertical", "horizontal", "top", "bottom", "inside", and "outside" are based on orientations or position relationships illustrated in the drawings. The terms are used to facilitate and simplify the description of the present disclosure, rather than indicate or imply that the devices or elements referred to herein are required to have specific orientations or be constructed or operate in the specific orientations. Accordingly, the terms should not be construed as limiting the present disclosure. In addition, the term "first", "second" are for illustrative purposes only and are not to be construed as indicating or imposing a relative importance or implicitly indicating the number of technical features indicated. Thus, a feature that limited by "first", "second" may expressly or implicitly include at least one of the features. In the description of the present disclosure, the meaning of "plurality" is two or more, unless otherwise specifically defined.

In the present disclosure, the word "exemplary" is used to mean "serving as an example, illustration, or explanation". Any embodiment described as "exemplary" in the present disclosure is not necessarily construed as being more preferable or advantageous than other embodiments.

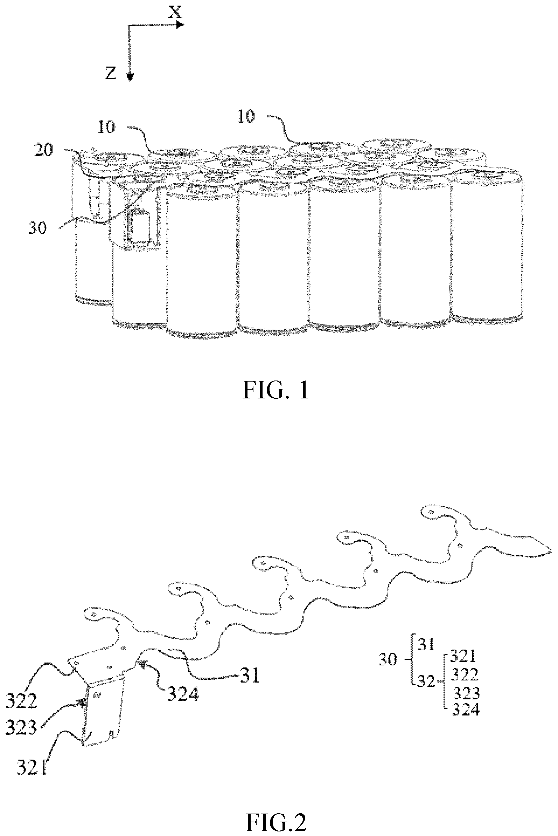

FIG. 1 is a perspective diagram of a cell group according to some embodiments of the present disclosure, and FIG. 2 is a first perspective diagram of a circuit board according to some embodiments of the present disclosure. Referring to FIGS. 1-2, the present disclosure may provide a collection assembly. The cell group may include a plurality of cells 10 and a collection assembly, where the collection assembly may include a mounting bracket 20 and a circuit board 30.

The mounting bracket 20 can be mounted on the cell 10. The circuit board 30 may have a wiring portion 31 and a mounting portion 32, where the wiring portion 31 can be connected to the cell 10. The mounting portion 32 may be detachably mounted on the mounting bracket 20.

In some embodiments of the present disclosure, the number of the cells 10 may be two or three or more. The shape of each of the cells 10 may be a cylinder. FIG. 1 is only a schematic illustration of the cells 10. In other embodiments of the disclosure, the shape of each of the cells 10 may be a cuboid.

In some embodiments of the present disclosure, the material of the mounting bracket 20 may be plastic, and the material of the circuit board 30 may be a flexible printed circuit board (FPC) and an epoxy resin plate (FR4).

In some embodiments of the present disclosure, the collection assembly may include a mounting bracket and a circuit board, where the mounting bracket is mounted on the cell, and a wiring portion of the circuit board is connected to the cell. By enabling the mounting portion of the circuit board to be detachably mounted on the mounting bracket, disassembly between the mounting bracket and the circuit board can be facilitated, and the collection assembly is not easily damaged during disassembling of the collection assembly, thereby improving the difficulty in overhaul and maintenance of the collection assembly.

In some embodiments of the present disclosure, referring to FIGS. 1 and 2, the mounting bracket 20 may be mounted on the cell 10 in a first direction. The wiring portion 31 may be mounted on the cell 10 in a second direction. The first direction and the second direction are perpendicular to each other. The first direction is an X direction, and the second direction is a Z direction.

In some embodiments of the present disclosure, the wiring portion 31 may have a curved shape. For example, the wiring portion 31 may be U-shaped, S-shaped, or the like. The mounting bracket 20 may be U-shaped, S-shaped, or the like.

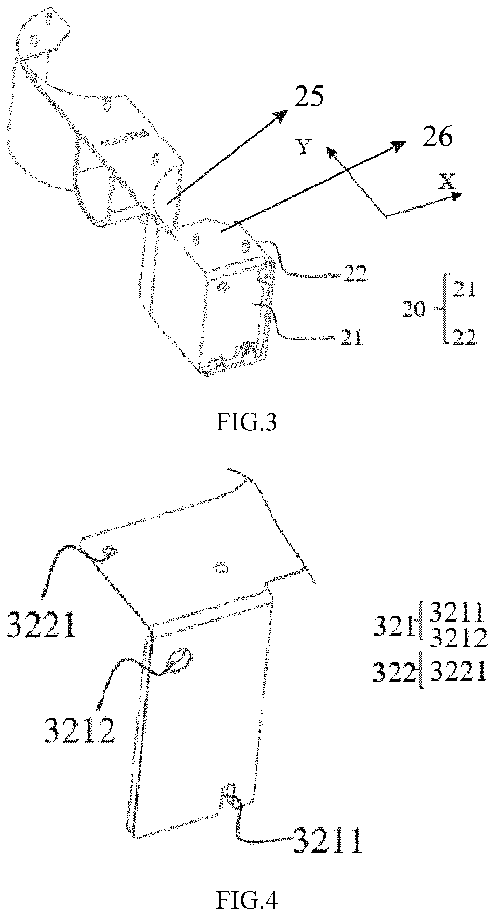

In some embodiments of the present disclosure, FIG. 3 is a first perspective view of a mounting bracket according to some embodiments of the present disclosure, and FIG. 4 is a second perspective diagram of a circuit board according to some embodiments of the present disclosure. Referring to FIGS. 1 to 4, the mounting portion 32 may include a first mounting portion 321, and the mounting bracket 20 may have a first mounting surface 21, where the first mounting portion 321 may be attached to the first mounting surface 21.

In some embodiments of the present disclosure, the first mounting portion 321 may be attached to the first mounting surface 21 to increase a contact area between the first mounting portion 321 and the first mounting surface 21, thereby improving the stability of mounting the cell 10 and preventing the cell 10 from loosening or falling off.

In some embodiments of the present disclosure, referring to FIGS. 1 to 4, the mounting portion 32 may further include a second mounting portion 322 adjacent to the first mounting portion 321, and the mounting bracket 20 may further have a second mounting surface 22 adjacent to the first mounting surface 21, and the second mounting portion 322 is attached to the first mounting surface 21.

In some embodiments of the present disclosure, the second mounting portion 321 is attached to the first mounting surface 21 to increase a contact area between the first mounting portion 321 and the first mounting surface 21, thereby improving the stability of mounting the cell 10 and preventing the cell 10 from loosening or falling off.

In some embodiments of the present disclosure, the shape of the first mounting portion 321 may be the same as that of the first mounting surface 21, so that the first mounting portion 321 can be sufficiently contacted with the first mounting surface 21, thereby improving the stability of mounting the cell 10. The shape of the second mounting portion 322 may be the same as that of the second mounting surface 22, so that the second mounting portion 322 can be sufficiently contacted with the second mounting surface 22, thereby improving the stability of mounting the cell 10.

In some embodiments of the present disclosure, referring to FIGS. 1 to 4, the wiring portion 31 and the second mounting portion 322 may be flexible printed circuit boards 30 (FPC), and the first mounting portion 321 may be an epoxy resin plate (FR4). The wiring portion 31, the second mounting portion 322, and the first mounting portion 321 may have a rectangular shape, a circular shape, or the like. The thickness of the first mounting portion 321 may be in a range of 1.2mm-2mm. For example, the thickness of the first mounting portion 321 may be 1.4mm, 1.5 mm, 1.6mm, 1.7mm, 1.8mm, or the like.

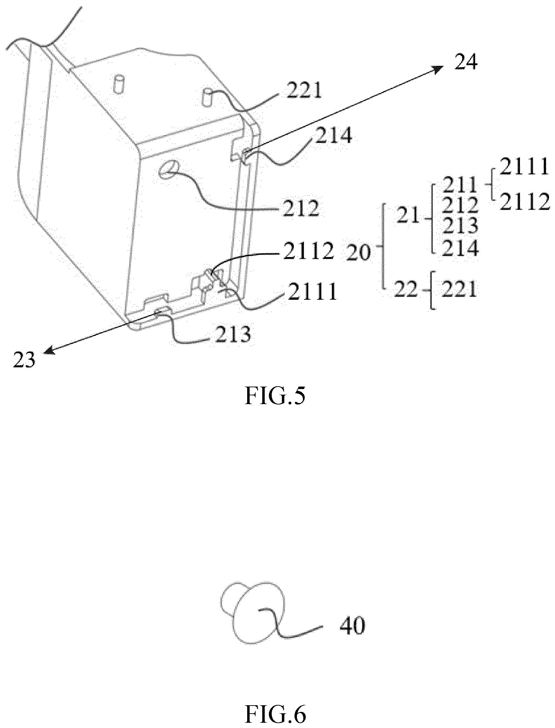

In some embodiments of the present disclosure, FIG. 5 is a second perspective view of a mounting bracket according to some embodiments of the present disclosure. Referring to FIGS. 4 and 5, a first snap-fit portion 211 may be provided at an edge of the first mounting surface 21, and a second snap-fit portion 3211 may be provided at an edge of the first mounting portion 321, where the first snap-fit portion 211 may be engaged with the second snap-fit portion 3211.

In some embodiments of the present disclosure, the first snap-fit portion 211 may be T-shaped, and the second snap-fit portion 3211 may be U-shaped. Engagement of the first snap-fit portion 211 with the second snap-fit portion 3211 may allow the first snap-fit portion 211 and the second snap-fit portion 3211 to be tightly fixed together, thereby improving the stability of the connection therebetween.

In some embodiments of the present disclosure, referring to FIGS. 1 to 5, the first snap-fit portion 211 may be provided with a first limiting portion 2111 and a second limiting portion 2112. The first limiting portion 2111 and the second limiting portion 2112 may be disposed in a crossed manner, where the first limiting portion 2111 may be disposed in the first direction and abut the second snap-fit portion 3211 to restrict the second snap-fit portion 3211 from moving in a third direction. The second limiting portion 2112 may be disposed in the third direction and abut the second snap-fit portion 3211 to restrict the second snap-fit portion 3211 from moving in the first direction. The first direction and the third direction may be perpendicular to each other.

Specifically, the first snap-fit portion 211 may be a T-shaped strip, one side of the T-shaped strip extends in the third direction, another side of the T-shaped strip extends in the first direction, the second snap-fit portion 3211 is a snap-fit groove into which the T-shaped strip is engaged.

Referring to FIGS. 1 and 3, the first direction is an X direction, and the third direction is a Z direction.

In some embodiments of the present disclosure, FIG. 6 is a perspective diagram of a fastener according to some embodiments of the present disclosure. Referring to FIGS. 4 to 6, the first mounting surface 21 may be provided with a first connection hole 212, and the first mounting portion 321 may be provided with a second connection hole 3212, where the first connection hole 212 is in communication with the second connection hole 3212, and fasteners 40 are detachably mounted within the first connection hole 212 and the second connection hole 3212, respectively.

In some embodiments of the present disclosure, the first connection hole 212 may be a T-shaped or circular through-hole, and the second snap-fit portion 3212 may be a FR4 hot riveting hole. The number of FR4 hot riveting holes may be one, which may be more convenient for an operator to fix the hot riveting hole. At the same time, it is also possible to reduce the manufacturing cost of a product and improve the production efficiency of the product.

In some embodiments of the present disclosure, the fasteners 40 may be, but are not limited to, threaded fasteners 40, such as bolts, studs, screws, rivets, and the like. Illustratively, referring to FIGS. 4 to 6, a rivet may be used to connect the first connection hole 212 to the second connection hole 3212. The mounting bracket 20 and the circuit board 30 can be fixed by mounting the fasteners 40, thereby fixing the plurality of cells 10. According to the present disclosure, the rivets are used to fix the mounting bracket 20 and the circuit board 30 to facilitate an operator to disassembly the mounting bracket 20 and the circuit board 30, which further facilitates inspection and maintenance of the mounting bracket 20, the circuit board 30, and the cells 10 and provides an economical and convenient solution for quality detection and after-sales service of a battery pack.

In some embodiments of the present disclosure, referring to FIGS. 4 and 5, a first fastening portion 213 may be provided at an edge of the first mounting surface 21 away from the second mounting portion 322, a first groove portion 23 may be provided between the first fastening portion 213 and the first mounting surface 21, and the first mounting portion 321 may be engaged into the first groove portion 23.

In some embodiments of the present disclosure, the first fastening portion 213 may be a 7-shaped snap-fit portion, which may have a simple, easy-to-use and reliable fastening performance, and the first groove portion 23 can be provided between the first fastening portion 213 and the first mounting surface 21, so that the first mounting portion 321 and the first groove portion 23 are fixed together quickly and conveniently.

In some embodiments of the present disclosure, referring to FIGS. 1, 4 and 5, a second fastening portion 214 may be provided at a second edge of the first mounting surface 21 adjacent to the first edge, the second groove portion 24 may be provided between the second snap-fit portion 214 and the first mounting surface 21, and the first mounting portion 321 is located in the second groove portion 24.

In some embodiments of the present disclosure, referring to FIGS. 1, 4 and 5, the second fastening portion 214 may be a 7-shaped snap-fit portion, which may have a simple, easy-to-use and reliable fastening performance, and the second groove portion 24 can be provided between the second fastening portion 214 and the first mounting surface 21, so that the first mounting portion 321 and the second groove portion 24 are fixed together quickly and conveniently.

In some embodiments of the present disclosure, referring to FIGS. 1, 4, and 5, the first fastening portion 213 may be fastened in the Z direction, and the second fastening portion 214 may be fastened in the X direction, so that the mounting portion 32 and the mounting bracket 20 are fixed firmly with each other. Of course, FIGS. 1, 4, and 5 are only schematic illustrations of the first fastening portion 213 and the second fastening portion 214. In other embodiments of the present disclosure, the first fastening portion 213 may be fastened in the X direction, and the second fastening portion 214 may be fastened in the Z direction, so that the mounting portion 32 and the mounting bracket 20 are fixed firmly.

In some embodiments of the present disclosure, referring to FIGS. 1, 4, and 5, the first mounting portion 321 may be disposed opposite to the first fastening portion 213 and/or the second fastening portion 214. Specifically, the first mounting portion 321 may be engaged with an inner side of the first fastening portion 213 and/or the second fastening portion 214 to be attached to the first mounting surface 21.

In some embodiments of the present disclosure, referring to FIGS. 1, 4 and 5, the second mounting surface 22 may be provided with a stud 221, the second mounting portion 322 may be provided with a through-hole 3221, and the stud 221 may be inserted into the through-hole 3221.

In some embodiments of the present disclosure, the number of studs 221 is equal to the number of through-holes 3221, and a size of an inner diameter of each of the studs 221 is adapted to that of the inner diameter of corresponding one of the through-holes 3221. Each of the studs 221 may be inserted into corresponding one of the through-holes 3221, so that the second mounting surface 22 may be fixed to the first mounting portion 321, and finally the mounting portion 32 and the mounting bracket 20 can be fixed firmly.

In some embodiments of the present disclosure, referring to FIGS. 1, 4, and 5, a plane in which the second mounting portion 322 is located is perpendicular to a plane in which the first mounting portion 321 is located, and the plane in which the first mounting portion 321 is located is perpendicular to a plane in which the wiring portion 31 is located.

In some embodiments of the present disclosure, a plane in which the second mounting portion 322 is located is perpendicular to a plane in which the first mounting portion 321 is located, so that structures of the second mounting portion 322 and the first mounting portion 321 can be ensured to be stable. The plane in which the first mounting portion 321 is located is perpendicular to the plane in which the wiring portion 31 is located, so that the structures of the first mounting portion 321 and the wiring portion 31 can be ensured to be stable.

In some embodiments of the present disclosure, the mounting bracket 20 may include an envelope portion 25 and a mount portion 26 connected to the envelope portion 25, where the envelope portion 25 is provided at a side portion of the cell 10, and the mount portion 26 is mounted at an end portion of the cell 10. Here, the envelope portion 25 and the mount portion 26 are simple in structure, which facilitate installation and maintenance of the collection assembly.

In some embodiments of the present disclosure, the mounting portion 32 may be stacked on the mount portion 26, so that the mounting bracket 20 and the circuit board 30 are more compact in structure.

In some embodiments of the present disclosure, the mounting portion 32 may further include a reinforcing plate 323 and a body plate 324 disposed integrally with the wiring portion 31, where the body plate 324 is disposed separately from and interconnected with the body plate 324. The reinforcing plate 323 and the body plate 324 can improve the structural strength of the circuit board 30.

Further, in order to better implement the collection assembly of the embodiments of the present disclosure, the present disclosure further provides a battery pack, including the above-described collection assembly. In the present disclosure, the mounting bracket and the circuit board are provided, the mounting bracket is mounted on the cell, and the wiring portion of the circuit board is connected to the cell, so that the mounting bracket and the mounting portion of the circuit board can be detached conveniently, and the collection assembly is not damaged, thereby finally ensuring the firmness of the battery pack.

## Claims

1. A collection assembly, comprising:
a mounting bracket (20) mountable on a cell (10); and
a circuit board (30) having a wiring portion (31) and a mounting portion (32), wherein the wiring portion (31) is connectable to the cell (10);
wherein the mounting portion (32) is detachably mounted on the mounting bracket (20).

2. The collection assembly of claim 1, wherein
the mounting portion (32) comprises a first mounting portion (321); and
the mounting bracket (20) has a first mounting surface (21), and the first mounting portion (321) is attached to the first mounting surface (21).

3. The collection assembly of claim 2, wherein
a first snap-fit portion (211) is provided at an edge of the first mounting surface (21), and a second snap-fit portion (3211) is provided at an edge of the first mounting portion (321); and
the first snap-fit portion (211) is engaged with the second snap-fit portion (3211).

4. The collection assembly of claim 3, wherein
the first snap-fit portion (211) is provided with a first limiting portion (2111) and a second limiting portion (2112); and
the first limiting portion (2111) and the second limiting portion (2112) are disposed in a crossed manner, wherein the first limiting portion (2111) abuts the second snap-fit portion (3211) in a first direction, and the second limiting portion (2112) abuts the second snap-fit portion (3211) in a third direction perpendicular to the first direction.

5. The collection assembly of claim 4, wherein the first snap-fit portion (211) is a T-shaped strip, one side of the T-shaped strip extends in the third direction, another side of the T-shaped strip extends in the first direction, and the second snap-fit portion (3211) is a snap-fit groove into which the T-shaped strip is engaged.

6. The collection assembly of any one of claims 2-5, wherein
the first mounting surface (21) is provided with a first connection hole (212), and the first mounting portion (321) is provided with a second connection hole (3212); and
the first connection hole (212) is in communication with the second connection hole (3212), and fasteners (40) are detachably mounted within the first connection hole (212) and the second connection hole (3212), respectively.

7. The collection assembly of any one of claims 2-6, wherein a first fastening portion (213) is provided at a first edge of the first mounting surface (21), a first groove portion (23) is provided between the first fastening portion (213) and the first mounting surface (21), and the first mounting portion (321) is engaged into the first groove portion (23).

8. The collection assembly of claim 7, wherein a second fastening portion (214) is provided at a second edge of the first mounting surface (21) adjacent to the first edge, and a second groove portion (24) is provided between the second fastening portion (214) and the first mounting surface (21), and the first mounting portion (321) is located within the second groove portion (24).

9. The collection assembly of any one of claims 2-8, wherein the mounting portion (32) further comprises a second mounting portion (322) adjacent to the first mounting portion (321); and
the mounting bracket (20) further has a second mounting surface (22) adjacent to the first mounting surface (21), and the second mounting portion (322) is attached to the second mounting surface (22).

10. The collection assembly of claim 9, wherein the second mounting surface (22) is provided with a stud (221), the second mounting portion (322) is provided with a through-hole (3221), and the stud (221) is inserted into the through-hole (3221).

11. The collection assembly of claim 9, wherein a plane in which the second mounting portion (322) is located is perpendicular to a plane in which the first mounting portion (321) is located, and a plane in which the first mounting portion (321) is located is perpendicular to a plane in which the wiring portion (31) is located.

12. The collection assembly of any one of claims 1-11, wherein the mounting bracket (20) is mounted on the cell in a first direction; and
the wiring portion (31) is mounted on the cell (10) in a second direction perpendicular to the first direction.

13. The collection assembly of any one of claims 1-12, wherein the mounting bracket (20) comprises an envelope portion (25) and a mount portion (26) connected to the envelope portion (25), the envelope portion (25) is provided at a side portion of the cell (10), and the mount portion (26) is provided at an end portion of the cell (10); and the mounting portion (32) is stacked on the mount portion (26).

14. The collection assembly of any one of claims 1-13, wherein the mounting portion (32) further comprises a reinforcing plate (323) and a body plate (324), the body plate (324) is disposed integrally with the wiring portion (31), and the reinforcing plate (323) is disposed separately from and interconnected with the body plate (324).

15. A battery pack, comprising: the collection assembly of any one of claims 1-14.
